(19) Europäisches Patentamt
European Patent Office
Office européen des brevets

(11) **EP 3 073 242 A1**

(12) **EUROPEAN PATENT APPLICATION**
published in accordance with Art. 153(4) EPC

(43) Date of publication:
**28.09.2016 Bulletin 2016/39**

(51) Int Cl.:
**G01M 11/00** (2006.01)    **G01M 11/02** (2006.01)

(21) Application number: **14863964.4**

(22) Date of filing: **04.11.2014**

(86) International application number:
**PCT/JP2014/079232**

(87) International publication number:
**WO 2015/076097 (28.05.2015 Gazette 2015/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.11.2013   JP 2013238489**

(71) Applicant: **Tyco Electronics Japan G.K.**
**Kawasaki-shi, Kanagawa 213-8535 (JP)**

(72) Inventor: **KOBAYASHI, Shigeru**
**Kawasaki-shi**
**Kanagawa 213-8535 (JP)**

(74) Representative: **Johnstone, Douglas Ian et al**
**Baron Warren Redfern**
**1000 Great West Road**
**Brentford TW8 9DW (GB)**

(54) **DEVICE FOR MEASURING OPTICAL PROPERTIES**

(57)    This invention provides a device for measuring an optical-fiber component, said device being capable of obtaining measurement results for insertion loss with a high degree of reproducibility and without using a large amount of optical fiber. Said device contains a light source (3) that emits measuring light (DL), an optical fiber (7), and a launch connector (9). The measuring light (DL) enters the optical fiber (7) from one end thereof, and the launch connector (9) is connected to the other end of the optical fiber (7). The measuring light (DL) that enters the optical fiber (7) has a numerical aperture (NAp) that yields an insertion loss ($L_\beta$) corresponding to the insertion loss ($L_\alpha$) due to steady-state excitation in the optical fiber (7).

Fig. 3

## Description

Technical Field

The present invention relates to a device suitable for measuring optical properties of an optical fiber part represented by an optical connector.

Background Art

Optical fibers are classified into multi-mode optical fibers allowing passage of a plurality of modes and single-mode optical fibers allowing passage of a single mode. The multi-mode optical fibers are classified into step index (SI)-type optical fibers where a refractive index distribution within a core is uniform and graded index (GI)-type optical fibers where a refractive index distribution within a core gradually varies.

The SI-type optical fibers are widely used in an industrial field and an automobile field. A method for testing insertion losses of the multi-mode optical fibers themselves including the SI-type optical fibers are regulated in JIS (Japanese Industrial Standards) C 6823. However, this loss testing method assumes using a sufficiently long optical fiber, as also disclosed in Patent Literature 1, but in optical fibers available in the market, it is not easy to satisfy this assumption.

On one hand, regarding an optical fiber part required for constituting an optical transmission path including an optical fiber, for example, an optical connector, its optical properties including an insertion loss must also be measured like the optical fiber. An insertion loss of an optical connector used for the SI-type optical fiber is regulated in JIS C 5961. However, even if measurement is performed complying with JIS C 5961, different results may occur in respective measurements, which often results in that reproducibility cannot be obtained regarding the measurement results. Measurement is generally performed by causing measurement light to be incident on an optical fiber connected to an optical connector, but the reason why reproducibility cannot be obtained is because states of optical distributions within an optical fiber do not necessarily become equal for respective measurements due to various factors.

Citation List

Patent Literature

PTL 1: JP2007-46973A

Summary of Invention

Technical Problem

In order to make the optical distribution state within the optical fiber stable, reproducibility of the measurement result can be obtained by adopting a steady mode excitation at a measurement time. In order to realize the reproducibility, however, a sufficiently long optical fiber is still required. As one example, a length of 2 km or more is required in a case of a plastic clad multi-mode optical fiber. However, since optical fibers available in the market are in the order of several hundred meters at longest, it is actually difficult to perform measurement according to the steady mode excitation.

The present invention has been made in view of such a technical problem and an object thereof is to provide a device for measuring optical properties, which can obtain a measurement result of an insertion loss with excellent reproducibility without using a very long optical fiber.

Solution to Problems

Based upon such an object, a device for measuring optical properties of the present invention is characterized by comprising: a light source emitting measurement light, an optical fiber with one end side and the other end side, on which the measurement light is incident from the one end side, and an emitting end connected to the other end side of the optical fiber, wherein measurement light of a numerical aperture NAp from which an insertion loss $L_\beta$ corresponding to an insertion loss $L_\alpha$ according to a steady mode excitation of the optical fiber can be obtained is incident on the optical fiber. According to the examination performed by the present inventors, an insertion loss $L_\beta$ of a launch connector is in a proportional relationship with NA (numerical aperture) of a measurement light (incident light). Therefore, the present inventors have focused on that a distribution state of light according to a steady mode excitation could be reproduced by utilizing this characteristic to use NA which can obtain an insertion loss $L_\beta$ coincident with an insertion loss $L_\alpha$ according to the steady mode excitation.

In the measuring device of the present invention, it is most desirable for reproducing a distribution state of light according to the steady mode excitation in the optical fiber that the numerical aperture NAp is set such that the insertion loss $L_\beta$ is coincident with an insertion loss $L\alpha$. However, considering variations, a margin of, for example, $\pm 15\%$ is provided and the numerical aperture NAp may be set within the range.

The measuring device of the present invention described above can reproduce a distribution state of light which can measure an insertion loss $L_\beta$ equivalent to a distribution state of light according to a steady mode excitation in an optical fiber when measurement light of a numerical aperture NAp is incident on an optical fiber in the case where the measuring device is used for measurement.

Advantageous Effects of Invention

According to the measuring device of the present invention, since a distribution state of light which can measure an insertion loss $L_\beta$ equivalent to a distribution state of light according to a steady mode excitation in an optical fiber without using a very long optical fiber, optical properties, or a measurement result of an insertion loss can be obtained with excellent reproducibility.

Brief Description of Drawings

Figure 1 shows a measuring device in this embodiment, (a) showing a schematic configuration, and (b) and (c) showing an outline of a measurement procedure of an insertion loss;

Figure 2 shows modified examples of the measuring device in this embodiment;

Figure 3 is an experimental result showing that NA of incident light and an insertion loss $L_\beta$ in a lunch connector are in a proportional relationship;

Figure 4 is tables showing examples of a relationship among insertion losses of respective optical fibers according to a steady mode excitation, NA of incident light and an insertion loss in a launch connector; and

Figure 5 is a diagram representing the examples of Figure 4 on configuration of a measuring device.

Description of Embodiments

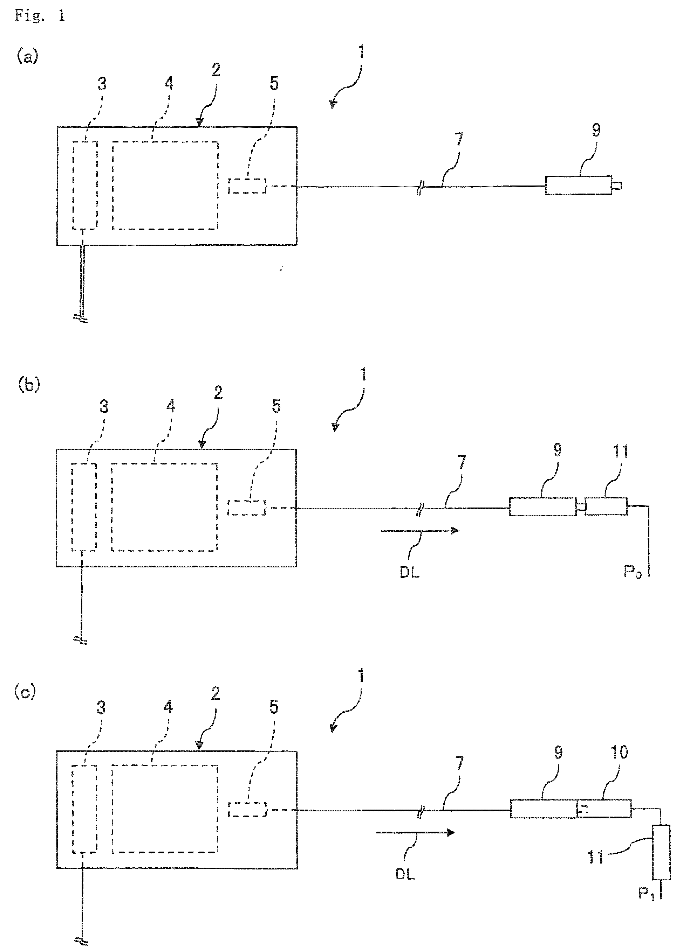

The present invention will be explained below in detail based upon embodiments shown in accompanying drawings. As shown in Figure 1, a device for measuring optical properties of an optical fiber part 1 according to this embodiment is composed of a light source module 2, an optical fiber 7 having one end side connected to the light source module 2, and a launch connector 9 connected with the other end side of the optical fiber 7. As shown in Figure 1(c), the measuring device 1 performs irradiation of measurement light DL from the light source module 2 toward an optical connector 10 in a state where the optical connector 10 constituting a measurement target has been attached to the launch connector 9 to measure intensity $P_1$ of the measurement light DL passing through the optical connector 10. On one hand, as shown in Figure 1(b), intensity $P_0$ of measurement light DL emitted from the launch connector 9 is preliminarily measured in a singular state of the measuring device 1 which is not attached with the optical connector 10. From the intensities $P_1$ and $P_0$ which have been measured, a measurement result of an insertion loss of the optical connector 10 can be obtained. As shown in Figure 1, the intensities $P_0$ and $P_1$ of the measurement lights DL are measured by using a light power meter 11. As the light power meter 11, a thermal conversion-type one or a photoelectric conversion-type one is generally used according to a measurement principle of the light power meter 11, but any one of these light power meters 11 can be used.

The light source module 2 is composed of a light source 3, an optical system 4 guiding measurement light DL emitted from the light source 3 efficiently, and, for example, a ferrule 5 fixed with one end side of the optical fiber 7. As the light source 3, a laser diode or a light-emitting diode serving as a stabilized light source can be used, but the present invention is not limited to these diodes and can also use a white light source using a halogen lump or the like. The optical system 4 is specifically composed of a single optical lens or a plurality of optical lenses.

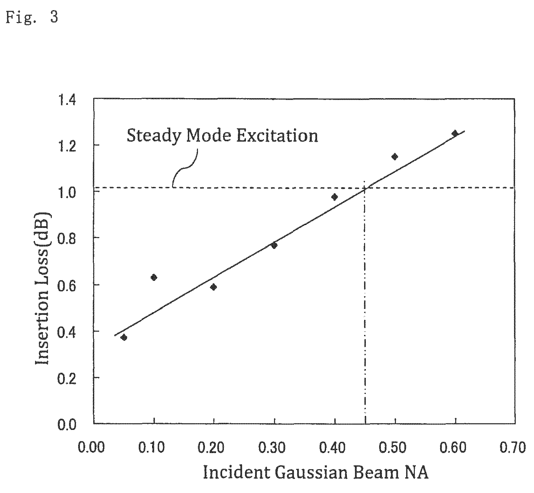

An insertion loss $L_\beta$ was actually measured using measurement light DL emitted from the launch connector 9 of the measuring device 1. As the optical fiber 7, a hard polymer clad fiber having a length of 1m, a core diameter/clad diameter = 200 $\mu$m/230$\mu$m, and a numerical aperture (NA) = 0.37 was used. Further, lights where the NA has been fluctuated in a range of 0.05 to 0.60 were caused to be incident on the optical fiber 7 from the light source 3. As the incident light, a Gaussian beam can be used. On one hand, a steady mode excitation was created using an optical fiber with a length of 2 km having the same specification as the above and an insertion loss $L_\alpha$ of the optical fiber 7 was measured. A result of the measurement is shown in Table 1, and a result obtained by analyzing the result shown in Table 1 utilizing linear approximation is further shown in Figure 3.

[TABLE 1]

| Incident Gaussian Beam NA | Insertion Loss (dB) |
|---|---|
| 0.05 | 0.37 |
| 0.1 | 0.63 |
| 0.2 | 0.59 |
| 0.3 | 0.77 |
| 0.4 | 0.98 |
| 0.5 | 1.15 |
| 0.6 | 1.25 |
| Steady Mode Excitation | 1.04 |

As shown in Table 1 and Figure 3, it is understood that the insertion loss $L_\beta$ to the NA of the incident light is substantially linear. Further, comparing the result of the insertion loss $L_\beta$ and the insertion loss $L_\alpha$ (= 1.04) according to the steady mode excitation with each other, the insertion loss $L_\beta$ can be caused to coincide with or come close to the insertion loss $L_\alpha$ according to the steady mode excitation by setting the NA of the incident light to 0.45 or so. That is, by adjusting the NA of the incident light, a state of light distribution equivalent to that of light according to the steady mode excitation can be reproduced. In the case of this experimental example, a satisfactory result can be obtained by causing light of NA (0.45) of 1.2 times NA of 0.37 of the optical fiber to be incident on the optical fiber by the measuring device 1. The NA of light can be determined considering variations to the insertion loss. For example, when a margin based upon the variation is set to ±15%, a connector loss can be measured by using light of NA of 0.95 to 1.5 times the NA of the optical fiber.

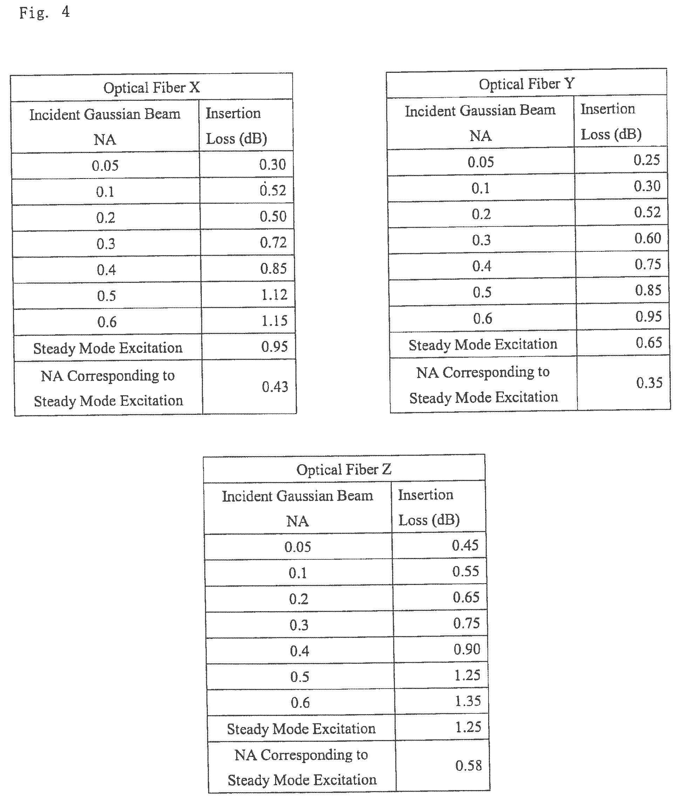

A procedure of manufacturing the measuring device 1 will be explained based upon the above result. [Measurement of Insertion Loss $L_\alpha$ according to Steady Mode Excitation] First of all, regarding an optical fiber 7 to be applied to the measuring device 1, an insertion loss ($L_\alpha$) according to a steady mode excitation is acquired. When the steady mode excitation is known, a value thereof may be used, or a test for newly acquiring an insertion loss may be performed. Incidentally, the other specification of the optical fiber described above is acquired in advance. Regarding the optical fiber 7, many kinds thereof are present and are standardized, so that the insertion losses $L_\alpha$ according to the steady mode excitation are acquired in advance corresponding to the kinds of the optical fibers 7 applied to the measuring device 1. When optical fibers 7 belonging to standards such as [optical fiber X], [optical fiber Y], [optical fiber Z]··· are applied to the measuring device 1, as shown in Figure 4, the insertion losses $L_\alpha$ according to the steady mode excitation are acquired corresponding to the respective kinds (X, Y, Y···) of the optical fibers 7 to be applied to the measuring device 1.

[Measurement of Insertion Loss $L_\beta$ in Measuring Device 1] Next, insertion losses are measured by using the measuring device 1 including the optical fiber 7 and the launch connector 9. The measurement is performed to each of the kinds of the optical fibers 7 while varying the NA of lights incident on the optical fibers 7. Thus, as shown in Figure 4, measurement data $L_\beta$ where the NA of light and the insertion loss correspond to each other can be obtained for each of the kinds of the optical fibers 7.

[Specifying Incident Light] Next, by collating the insertion loss $L_\alpha$ with the measurement data $L_\beta$ of the insertion loss, the NA of the incident light which can reproduce a state of a light distribution equivalent to that of light according to the steady mode excitation in the measuring device 1 is specified. The examples of Figure 4 show that by adopting NA of 0.43 in the optical fiber X, NA of 0.35 in the optical fiber Y, and NA of 0.58 in the optical fiber Z, states of light distributions equivalent to those of lights according to the steady mode excitation can be reproduced in the measuring device 1 when the optical fibers 7 of corresponding kinds are used. Incidentally, NA allowing reproduction of a state of light distribution equivalent to that of light according to the steady mode excitation is hereinafter referred to as "reproduction NA". The reason why the reproduction NA can be set considering the variations without limiting in 0.43 in the case of the optical fiber X has been as described above.

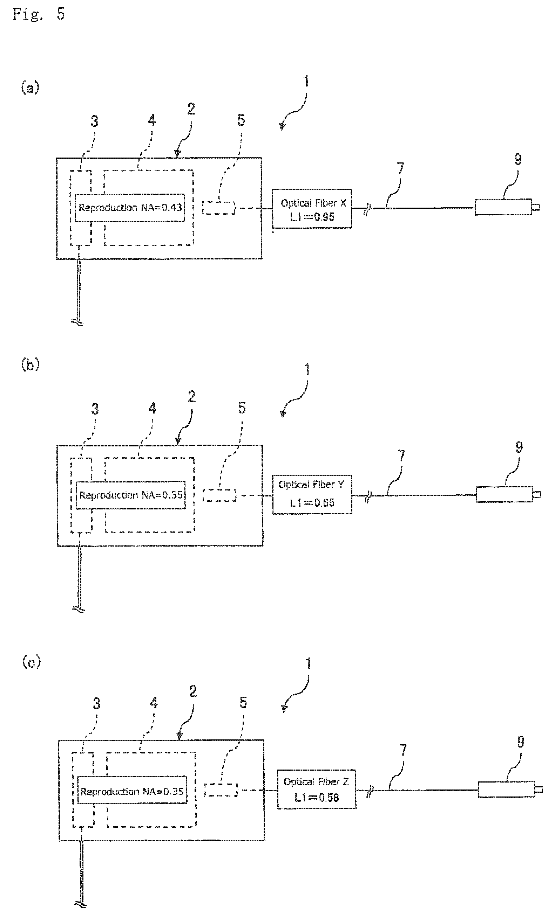

[Manufacture of Measuring Device 1] After the reproduction NA has been obtained, the incident light on the measuring device 1 is adjusted so as to achieve the reproduction NA. For example, as shown in Figure 5, in the measuring device 1 using the optical fiber X as the optical fiber 7, the NA of incident light is set at 0.43, and similarly, the NA of incident light is set at 0.36 in the measuring device 1 using the optical fiber Y and the NA of incident light is set at 0.58 in the measuring device 1 using the optical fiber X.

The NA is given from the following equation (1) when the maximum angle to an optical axis of a light beam incident on an objective lens (the optical system 4 in this embodiment) from an object (the light source 3 in this embodiment) is represented by θ and a refractive index of a medium between the object and the objective lens is represented by n (air, n = 1). Therefore, in order to adjust the NA of the incident light, adjustments of the light source 3 and the optical system 4 can be performed based upon the equation (1).

$$NA = n \cdot \sin \theta \cdots (1)$$

[Configuration of Measuring Device 1] The measuring device 1 which has been manufactured according to the above procedure has the following requirements. That is, the measuring device 1 is configured such that light of NA which can obtain an insertion loss $L_\beta$ corresponding to the insertion loss $L_\alpha$ of the optical fiber 7 according to the steady mode excitation is caused to be incident on the optical fiber 7, and according to this configuration, the measuring device 1 can reproduce a state of a light distribution equivalent to that of light according to the steady mode excitation. Therefore, according to the measuring device 1 according to this embodiment, a measurement result of the insertion loss can be obtained with excellent reproducibility without using a very long optical fiber.

Though the present invention has been explained above based upon the embodiment, it is possible to select any of the configurations adopted in the above embodiment or properly modify the configurations to other configurations without deviating from the gist of the present invention. A measurement target is not limited to the optical connector, and various parts regarding the optical fiber requiring for measurement of optical properties, for example, a splitter, a combiner, a multiplexer/demultiplexer, and an SI-type embedded waveguide can be adopted as a measurement target. Fields where these optical parts are used are not also limited and the present invention can be applied to various fields such as an industrial field, an automobile field, an aerospace field, and the like.

Further, though the insertion loss has been adopted as a measurement target of the optical properties in the above embodiment, the present invention is not limited to this insertion loss. The present invention is characterized in that even if an optical fiber with a short length is used, a state of an optical distribution equivalent to that of light according to the steady mode excitation can be reproduced, and optical properties which can be measured utilizing this characteristic, for example, a return loss or the like can be measured.

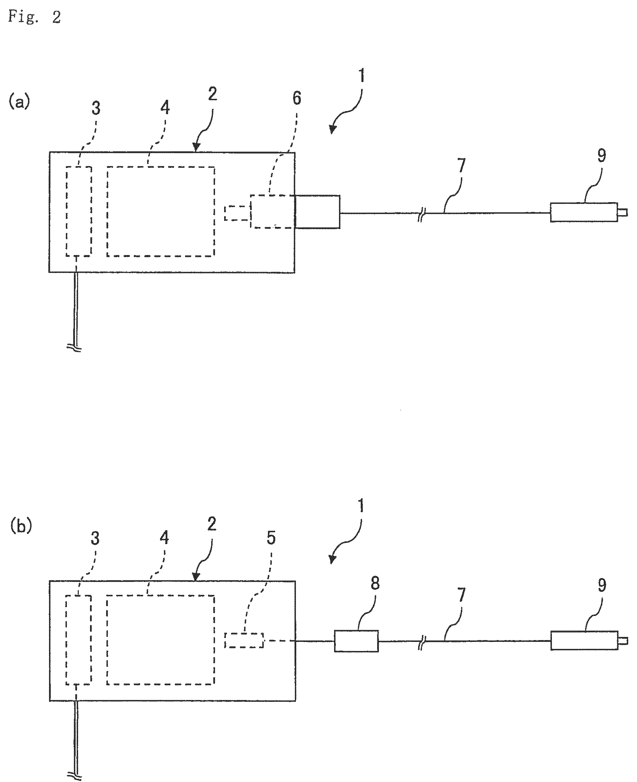

In addition, for example, as shown in Figure 2(a), instead of the fixed ferrule 5 shown in Figure 1, an attachable/detachable plug 6 to/from the light source module 2 can be used. The plug 6 has the other end connected with the launch connector 9. Thereby, measurement can be performed by connecting a different optical fiber 7 to the light source module 2. Further, as shown in Figure 2(b), an exciter 8 can be provided in the middle of the optical fiber 7. Since the state of light in the optical fiber 7 can be trimmed to a desired distribution profile by using the exciter 8, a measurement result can be obtained more stably. Further, in addition to the exciter 8, a mode filer for removing light unnecessary for measurement can also be provided in the middle of the optical fiber 7.

Reference Signs List

1    measuring device
2    light source module
3    light source
4    optical system
5    ferrule
6    plug
7    optical fiber
8    exciter
9    launch connector
10   optical connector (measurement target)
11   light power meter

**Claims**

1.   A device for measuring optical properties, **characterized by** comprising:

    a light source emitting measurement light;
    an optical fiber provided with one end side and the other end side, on which the measurement light is incident from the one end side; and
    an emitting end connected to the other end side of the optical fiber and emitting the measurement light, wherein
    the measurement light of a numerical aperture $NAp$ from which an insertion loss $L_\beta$ corresponding to an insertion loss $L_\alpha$ according to a steady mode excitation of the optical fiber can be obtained is incident on the optical fiber.

2.   The device for measuring optical properties according to claim 1, wherein
    the numeral aperture $NAp$ is included in a range where the insertion loss $L_\beta$ is coincident with the insertion loss $L_\alpha$, or a predetermined margin is added to the insertion loss $L_\alpha$.

3.   The device for measuring optical properties according to claim 1, wherein
    the optical fiber is configured such that when the measurement light of the numerical aperture $NAp$ is incident on the optical fiber, a distribution state of light equivalent to a distribution state of light according to the steady mode excitation can be realized.

Fig. 1

(a)

(b)

(c)

Fig. 2

(a)

(b)

Fig. 3

Fig. 4

| Optical Fiber X | |
|---|---|
| Incident Gaussian Beam NA | Insertion Loss (dB) |
| 0.05 | 0.30 |
| 0.1 | 0.52 |
| 0.2 | 0.50 |
| 0.3 | 0.72 |
| 0.4 | 0.85 |
| 0.5 | 1.12 |
| 0.6 | 1.15 |
| Steady Mode Excitation | 0.95 |
| NA Corresponding to Steady Mode Excitation | 0.43 |

| Optical Fiber Y | |
|---|---|
| Incident Gaussian Beam NA | Insertion Loss (dB) |
| 0.05 | 0.25 |
| 0.1 | 0.30 |
| 0.2 | 0.52 |
| 0.3 | 0.60 |
| 0.4 | 0.75 |
| 0.5 | 0.85 |
| 0.6 | 0.95 |
| Steady Mode Excitation | 0.65 |
| NA Corresponding to Steady Mode Excitation | 0.35 |

| Optical Fiber Z | |
|---|---|
| Incident Gaussian Beam NA | Insertion Loss (dB) |
| 0.05 | 0.45 |
| 0.1 | 0.55 |
| 0.2 | 0.65 |
| 0.3 | 0.75 |
| 0.4 | 0.90 |
| 0.5 | 1.25 |
| 0.6 | 1.35 |
| Steady Mode Excitation | 1.25 |
| NA Corresponding to Steady Mode Excitation | 0.58 |

Fig. 5

(a)

Reproduction NA=0.43

Optical Fiber X
L1=0.95

(b)

Reproduction NA=0.35

Optical Fiber Y
L1=0.65

(c)

Reproduction NA=0.35

Optical Fiber Z
L1=0.58

## INTERNATIONAL SEARCH REPORT

| International application No. |
| --- |
| PCT/JP2014/079232 |

**A. CLASSIFICATION OF SUBJECT MATTER**
*G01M11/00*(2006.01)i, *G01M11/02*(2006.01)i

According to International Patent Classification (IPC) or to both national classification and IPC

**B. FIELDS SEARCHED**

Minimum documentation searched (classification system followed by classification symbols)
G01M11/00, G01M11/02

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-57492 A  (Nippon Telegraph and Telephone Corp.), 08 March 2007 (08.03.2007), entire text; all drawings (Family: none) | 1-3 |
| A | JP 2007-46973 A  (Nippon Telegraph and Telephone Corp.), 22 February 2007 (22.02.2007), entire text; all drawings (Family: none) | 1-3 |
| A | JP 2006-38647 A  (Sumitomo Electric Industries, Ltd.), 09 February 2006 (09.02.2006), entire text; all drawings (Family: none) | 1-3 |

☒  Further documents are listed in the continuation of Box C.          ☐  See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 13 January 2015 (13.01.15) | 27 January 2015 (27.01.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2014/079232

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-186460 A  (Ando Electric Co., Ltd.),<br>08 July 1994 (08.07.1994),<br>entire text; all drawings<br>(Family: none) | 1-3 |
| A | JP 5-40074 A  (Nippon Telegraph and Telephone Corp.),<br>19 February 1993 (19.02.1993),<br>entire text; all drawings<br>(Family: none) | 1-3 |
| A | CD-ROM of the specification and drawings annexed to the request of Japanese Utility Model Application No. 86691/1991(Laid-open No. 30751/1993)<br>(Anritsu Corp.),<br>23 April 1993 (23.04.1993),<br>entire text; all drawings<br>(Family: none) | 1-3 |
| A | JP 60-127443 A  (Raychem Corp.),<br>08 July 1985 (08.07.1985),<br>entire text; all drawings<br>& US 4634274 A          & GB 2149501 A<br>& EP 141618 A2 | 1-3 |
| A | JP 57-116234 A  (Nippon Telegraph & Telephone Public Corp.),<br>20 July 1982 (20.07.1982),<br>entire text; all drawings<br>(Family: none) | 1-3 |
| A | JP 54-101336 A  (Nippon Telegraph & Telephone Public Corp.),<br>09 August 1979 (09.08.1979),<br>entire text; all drawings<br>(Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007046973 A